# EUROPEAN PATENT APPLICATION

(11) **EP 4 745 782 A1**
(43) Date of publication of application: **20.05.2026**
(21) Application number: 24949891.6
(22) Date of filing: 23.08.2024
(51) Int. Cl.: G06F 11/30, G06F 11/07

(54) **MONITORING SYSTEM, MONITORING METHOD, AND PROGRAM**

(71) Applicant: Rakuten Group, Inc., Setagaya-ku Tokyo 158-0094 (JP)
(72) Inventor: FUJIOKA, Kengo, Tokyo 158-0094 (JP); FUJII, Taisuke, Tokyo 158-0094 (JP); NISHIMURA, Ryo, Tokyo 158-0094 (JP); HASEGAWA, Daichi, Tokyo 158-0094 (JP)
(74) Representative: EIP
(86) International application number: PCT/JP2024/029956
(87) International publication number: WO 2026/042255

(57) **Abstract**

A text acquisition module (101) of a monitoring system (1) acquires text related to a state of a device (20) that is a monitoring target in a service. A time-series data acquisition module (102) acquires, based on the text, time-series data related to the state. A processing execution module (103) executes, based on the time-series data, processing relating to an anomaly in the service.

## Description

### Technical Field

The present disclosure relates to a monitoring system, a monitoring method, and a program.

### Background Art

Hitherto, time-series data relating to a state of a device that is a monitoring target has been analyzed for various purposes such as detection of, recovery from, or analysis of an anomaly in a service. For example, in Patent Literature 1, there is described a technology in which, when a failure (an example of an anomaly) has occurred in a system, an effective recovery procedure for recovery from the failure that has occurred in this system is identified based on a calculation model that calculates a degree of relevance between time-series data relating to a state of a device in this system and the recovery procedure for recovery from the failure that has occurred in this system.

### Citation List

### Patent Literature

[PTL 1] JP 2021-015321 A

### Summary of Invention

### Technical Problem

However, with the technology of Patent Literature 1, the time-series data is required in order to identify an effective recovery procedure, but there is no mention about acquiring time-series data to be used in processing relating to anomalies in a service by analysis of text (for example, an automatic notification email that informs of alert generated in the system, or a chat that is a dialogue between operators monitoring the system) related to a state of a device that is a monitoring target in the service. For that reason, with the technology of Patent Literature 1, time-series data to be used in processing relating to anomalies in a service cannot be acquired from text related to a state of a device.

One object of the present disclosure is to acquire time-series data to be used in processing relating to anomalies in a service from text related to a state of a device.

### Solution to Problem

According to one embodiment of the present disclosure, there is provided a monitoring system including: a text acquisition module configured to acquire text related to a state of a device that is a monitoring target in a service; a time-series data acquisition module configured to acquire, based on the text, time-series data related to the state; and a processing execution module configured to execute, based on the time-series data, processing relating to an anomaly in the service.

### Advantageous Effects of Invention

According to the present disclosure, it is possible to acquire the time-series data to be used in the processing relating to anomalies in the service from the text related to the state of the device.

### Brief Description of Drawings

FIG. 1 is a diagram for illustrating an example of a hardware configuration of a monitoring system.
FIG. 2 is a diagram for illustrating an example of text related to a state of a communication device.
FIG. 3 is a graph for showing an example of time-series data of the text.
FIG. 4 is a diagram for illustrating an example of functions implemented in the monitoring system.
FIG. 5 is a table for showing an example of a text database.
FIG. 6 is a flowchart for illustrating an example of processing executed in the monitoring system.
FIG. 7 is a diagram for illustrating an example of functions implemented in a monitoring system of modification examples.
FIG. 8 is a set of diagrams for illustrating an example of a method of generating time-series data in Modification Example 3.
FIG. 9 is a table for showing an example of dictionary data.
FIG. 10 is a table for showing an example of a measurement result database in Modification Example 10.

### Description of Embodiments

### [1. Hardware Configuration of Monitoring System]

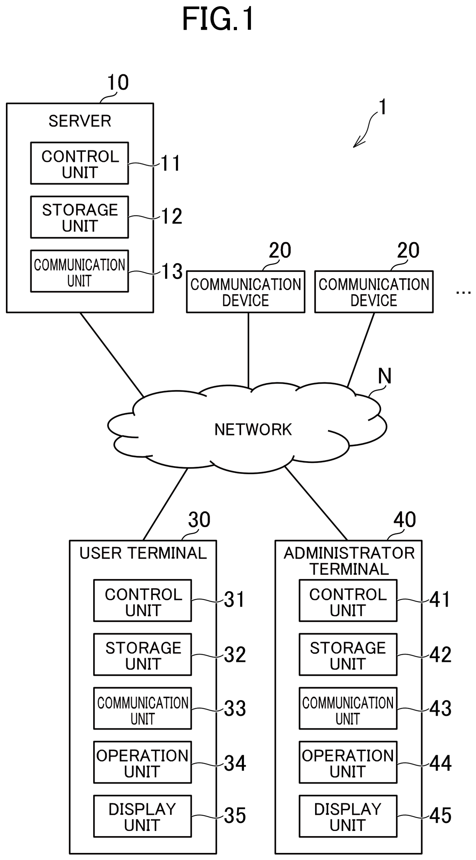

An example of an embodiment of a monitoring system, a monitoring method, and a program according to the present disclosure is described. FIG. 1 is a diagram for illustrating an example of a hardware configuration of the monitoring system. For example, a monitoring system 1 includes a server 10, communication devices 20, a user terminal 30, and an administrator terminal 40. Each of the server 10, the communication devices 20, the user terminal 30, and the administrator terminal 40 can be connected to a network N. The network N is, for example, the Internet, a public communication line, or a LAN.

The server 10 is a server computer. In this embodiment, a case in which a telecommunications carrier manages the server 10 is taken as an example. For example, the server 10 includes a control unit 11, a storage unit 12, and a communication unit 13. The control unit 11 includes at least one processor. The storage unit 12 includes at least one of a volatile memory such as a RAM or a nonvolatile memory such as a flash memory. The communication unit 13 includes at least one of a communication interface for wired communication or a communication interface for wireless communication.

Each of the communication devices 20 is a device which communicates to and from another device. For example, the communication device 20 is a device managed by the telecommunications carrier. The communication device 20 may be a device for wireless communication or a device for wired communication. The communication device 20 relays at least one of call or data communication by a user. For example, the communication device 20 is a base station of a public communication line, a private branch exchange, an access point of a wireless LAN, a router, a hub, a repeater, a modem, or a server computer used in a virtualization technology. The communication device 20 may be a device of a telecommunications carrier which provides a full virtualization cloud-native mobile network to the user.

The user terminal 30 is a computer of the user using a communication service. For example, the user terminal 30 is a smartphone, a tablet computer, a personal computer, or a wearable terminal. For example, the user terminal 30 includes a control unit 31, a storage unit 32, a communication unit 33, an operation unit 34, and a display unit 35. Hardware configurations of the control unit 31, the storage unit 32, and the communication unit 33 may be the same as those of the control unit 11, the storage unit 12, and the communication unit 13, respectively. The operation unit 34 is an input device, such as a touch panel or a mouse. The display unit 35 is a display, such as a liquid crystal display or an organic EL display.

The administrator terminal 40 is a computer of an administrator in the communication service. For example, the administrator terminal 40 is a smartphone, a tablet computer, a personal computer, or a wearable terminal. For example, the administrator terminal 40 includes a control unit 41, a storage unit 42, a communication unit 43, an operation unit 44, and a display unit 45. Hardware configurations of the control unit 41, the storage unit 42, the communication unit 43, the operation unit 44, and the display unit 45 may be the same as those of the control unit 11, the storage unit 12, the communication unit 13, the operation unit 34, and the display unit 35, respectively.

Programs stored in the storage units 12, 32, and 42 may be supplied via the network N. Moreover, each computer may include at least one of a reading unit (for example, a memory card slot) for reading a computer-readable information storage medium or an input/output unit (for example, a USB port) through which data is input from or output to an external device. For example, a program stored in an information storage medium may be supplied to the server 10, the user terminal 30, or the administrator terminal 40 via at least one of the reading unit or the input/output unit.

Moreover, the monitoring system 1 is only required to include at least one computer, and is not limited to the example of FIG. 1. For example, the monitoring system 1 may include only the server 10 and the administrator terminal 40. In this case, the communication device 20 and the user terminal 30 exist outside the monitoring system 1. The monitoring system 1 may include only the server 10. In this case, the communication device 20, the user terminal 30, and the administrator terminal 40 exist outside the monitoring system 1. The monitoring system 1 may include the server 10 and another computer which is not shown in FIG. 1.

### [2. Overview of Embodiment]

In this embodiment, a case in which the communication device 20 is a server computer which has a containerized network function (CNF) is taken as an example. Further, a case in which the user terminal 30 is a smartphone is taken as an example. The monitoring system 1 monitors a state of the communication device 20 in the communication service used by the user. The communication device 20 relays communication of a large number of user terminals 30. When an anomaly occurs in the communication service, for example, the administrator identifies the communication device 20 that is a factor in the anomaly, and executes recovery work.

The administrator collects measurement results of various indices such as a communication amount, a CPU usage rate, a memory usage rate, or a temperature of the communication device 20 in order to execute, for example, detection of, recovery from, or analysis of an anomaly. However, the measurement results of those indices alone may not be enough for the administrator to satisfactorily execute detection of, recovery from, or analysis of an anomaly because an anomaly in the communication service can be caused by various factors. Accordingly, the monitoring system 1 in this embodiment executes detection of, recovery from, or analysis of an anomaly by using text related to the state of the communication device 20.

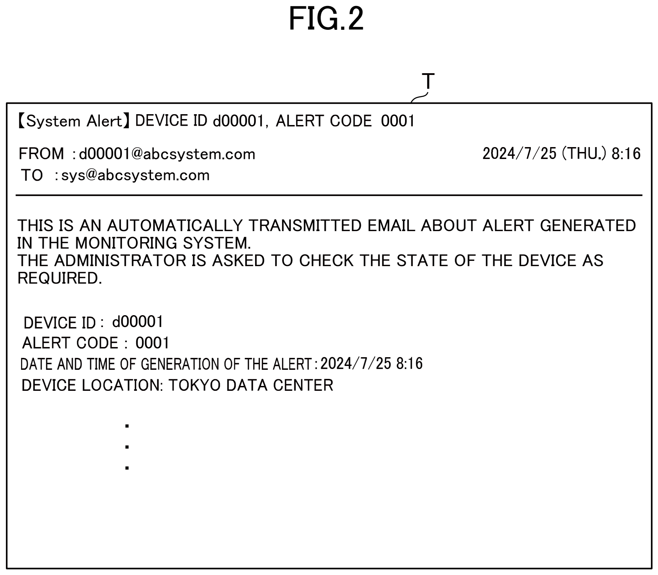

FIG. 2 is a diagram for illustrating an example of the text related to the state of the communication device 20. As illustrated in FIG. 2, in this embodiment, a case in which text T is an email is taken as an example. However, the text T is not limited to an email and may be in a format other than an email. For example, the text T may be a message in a chat, a message in a communication tool other than the chat, or a message in an SNS. When alert is detected by a predetermined detection method, the communication device 20 transmits the text T indicating content of the alert to an email address for administration.

The method of detecting alert may be the same as a method employed in a publicly-known communication service. For example, the communication device 20 detects alert when the communication amount reaches an amount equal to or more than a threshold value. The communication device 20 detects alert when the CPU usage rate reaches a rate equal to or more than a threshold value. The communication device 20 detects alert when the memory usage rate reaches a rate equal to or more than a threshold value. The communication device 20 detects alert when the temperature reaches a level equal to or more than a threshold value. The communication device 20 may detect alert when other conditions are satisfied.

In the example of FIG. 2, the text T includes a device ID by which the communication device 20 that is a source of alert is identifiable, an alert code indicating the type of the alert, an alert generation date and time at which the alert is generated, and a location at which the communication device 20 is placed, or some combination of those. For example, when detecting alert, the communication device 20 generates the text T including its own device ID, an alert code of the detected alert, an alert generation date and time that is the current date and time, and its own location of placement, or some combination of those. The communication device 20 transmits the generated text T to the email address for administration.

For example, reception of the text T by the server 10 from the communication device 20 does not always indicate occurrence of an anomaly in the communication service. There may be no problem in providing the communication service despite one specific communication device 20 reaching a CPU usage rate equal to or more than the threshold value. Thus, the content of the text T alone may not be enough to provide satisfactory support for the administrator in executing a maintenance task of the communication service. The monitoring system 1 of this embodiment accordingly acquires time-series data related to time-series changes in the number of pieces of text T by measuring time-series changes in the number of pieces of text T.

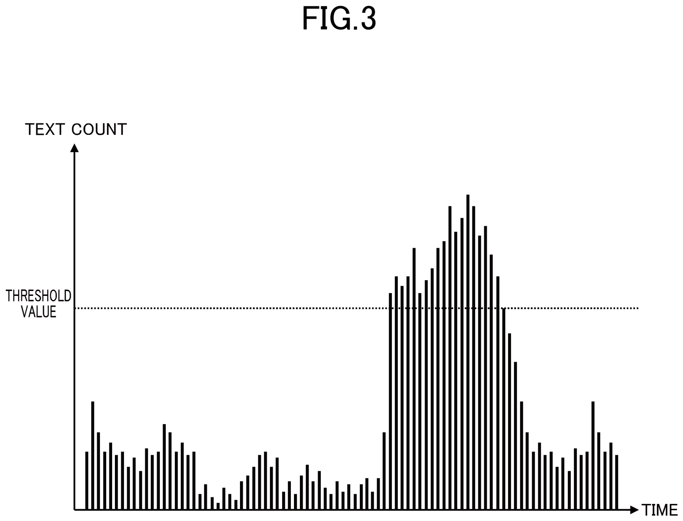

FIG. 3 is a graph for showing an example of the time-series data of the text T. The horizontal axis of FIG. 3 is a time axis. The vertical axis of FIG. 3 indicates the number of pieces of text T per unit time. The unit time is a time that serves as a reference for aggregation of the text T. The unit time may be paraphrased as "cycle of aggregation." For example, for each unit time, the server 10 calculates, by aggregation, the number of pieces of text T that has an alert generation date and time included in the unit time. The unit time may have any length determined in advance. For example, the unit time may be 1 second, 5 seconds, 10 seconds, 1 minute, 5 minutes, 10 minutes, an hour, or any other length.

In this embodiment, a case in which the server 10 calculates, by aggregation, the number of pieces of text T per unit time irrespective of what the device ID, the alert code, and the location are is taken as an example. As shown in FIG. 3, the number of pieces of text T may increase when some anomaly occurs in the communication service. When the number of pieces of text T per unit time reaches a threshold value or higher, the server 10 transmits a notification that informs of a possible anomaly taking place in the communication service to the administrator terminal 40. It is assumed that the notification includes the time-series data. When receiving the notification, the administrator terminal 40 displays content of the time-series data on the display unit 45. The administrator executes the maintenance task of the communication service by comprehensively taking not only the time-series data but also other factors such as measurement results into consideration.

In the manner described above, when alert is generated in each of the plurality of communication devices 20, the monitoring system 1 receives the text T from the communication device 20. The monitoring system 1 generates the time-series data by calculating, by aggregation, for each unit time, the number of pieces of text T that has an alert generation date and time included in the unit time. Based on the time-series data generated from the text T, the monitoring system 1 provides support for the administrator in performing the maintenance work of the communication service. Details of this embodiment are described below. In the following description, the reference symbol of the text T is omitted.

### [3. Functions Implemented in Monitoring System]

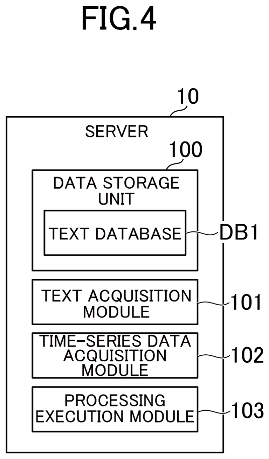

FIG. 4 is a diagram for illustrating an example of functions implemented in the monitoring system 1. In FIG. 4, functions implemented in the server 10 out of the functions implemented in the monitoring system 1 are illustrated. Respective functions of the communication device 20, the user terminal 30, and the administrator terminal 40 may be the same as functions in a publicly-known communication service. The server 10 includes, for example, a data storage unit 100, a text acquisition module 101, a time-series data acquisition module 102, and a processing execution module 103. The data storage unit 100 is implemented by the storage unit 12. The text acquisition module 101, the time-series data acquisition module 102, and the processing execution module 103 are each implemented by the control unit 11.

### [Data Storage Unit]

The data storage unit 100 stores data related to the communication service. For example, the data storage unit 100 stores a text database DB1 in which the text is stored. In this embodiment, a case in which the text database DB1 stores the text related to a state of each of the plurality of communication devices 20 is taken as an example. However, the text database DB1 may store only the text related to the state of one communication device 20.

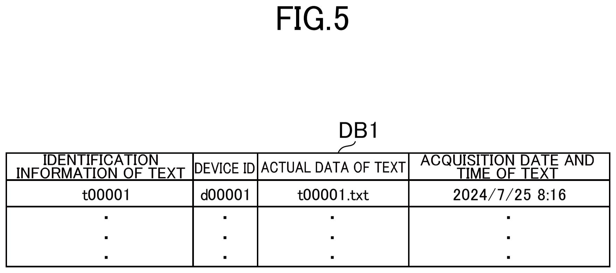

FIG. 5 is a table for showing an example of the text database DB1. The text database DB1 stores, for example, identification information by which a piece of text is identifiable, a device ID by which the communication device 20 is identifiable, actual data of the piece of text, and an acquisition date and time of the piece of text. Information stored in the text database DB1 is not limited to the example of FIG. 5. It is sufficient for the text database DB1 to store some information about the text. Content of the text database DB1 is updated by the text acquisition module 101 described later.

Data stored in the data storage unit 100 is not limited to the text database DB1. The data storage unit 100 may store a device database which stores various types of information about the communication device 20. The data storage unit 100 may store data (for example, information by which a unit time is identifiable, information by which a period of time indicated by the time-series data is identifiable, a threshold value for execution of notification to the administrator, or other types of information) required for generation of the time-series data.

### [Text Acquisition Module]

The text acquisition module 101 acquires the text related to the state of the communication device 20. The communication device 20 is an example of a device that is a monitoring target in the service. Thus, the term "communication device 20" can be read as "device that is the monitoring target." The device that is the monitoring target may be any device, and is not limited to the communication device 20. For example, the device that is the monitoring target may be the server 10, another computer other than the server 10, a component such as a CPU, a memory, or a network card included in the server 10 and the another computer, a battery, an antenna, a communication cable, or a sensor.

The state of the communication device 20 may be paraphrased as "operation of or a load on the communication device 20." The state of the communication device 20 may mean a hardware state or a software state. For example, a processing load, a load in terms of storage capacity, or a communication load on the communication device 20, or the temperature of the communication device 20, corresponds to the state of the communication device 20. The communication device 20 executing specific processing (for example, a response to a request from the outside), or the communication device 20 not executing specific processing (for example, a response to a request from the outside), corresponds to the state of the communication device 20 as well.

The text is a string of characters written in a natural language. The text may include signs other than characters. The text may be a sentence, or a string of characters not particularly organized into a sentence. In this embodiment, a case in which the communication device 20 generates the text is taken as an example, but the text may be generated by a computer other than the communication device 20. For example, another computer which monitors the communication device 20 may generate the text. The text may be input manually by a person (for example, the administrator or the user).

In this embodiment, it is assumed that the communication device 20 stores a format of the text in advance. When detecting alert, the communication device 20 sets pieces of information that are its own device ID, the alert code, and the location in the format of the text, to thereby generate the text. The communication device 20 transmits the text to the email address for administration. The text acquisition module 101 acquires the text from the communication device 20. The text acquisition module 101 issues identification information of the text, and stores the device ID of the communication device 20, actual data of the text, and the acquisition date and time of the text in the text database DB1 along with the identification information.

For example, the text acquisition module 101 is capable of acquiring, at any timing, the text stored in the text database DB1. When a predetermined time of maintenance work arrives, or at a time when the administrator performs predetermined operation, the text acquisition module 101 acquires a piece of text that is a processing target from the text database DB1. The piece of text that is a processing target is a piece of text to be used in generation of the time-series data. In a case in which the text is stored in a database other than the text database DB1, on a computer other than the server 10, or on an information storage medium, the text acquisition module 101 acquires the text from the another database, the another computer, or the information storage medium.

For example, the text acquisition module 101 may acquire a plurality of pieces of text related to states at times (dates and times) different from one another. A piece of text indicates the state of the communication device 20 at a certain time. In this embodiment, each time one of the plurality of communication devices 20 detects alert, the communication device 20 transmits a piece of text that indicates its own state at that time to the server 10. Accordingly, the time (for example, the alert generation date and time or the text acquisition date and time) of one piece of text may differ from the time of another piece of text. There is also a case in which the time of one piece of text happens to be the same as the time of another piece of text.

### [Time-Series Data Acquisition Module]

The time-series data acquisition module 102 acquires time-series data related to the state of the communication device 20, based on the text acquired by the text acquisition module 101. The time-series data is data indicating time-series changes in the state of the communication device 20. The time-series data may be paraphrased as data indicating how the state of the communication device 20 changes with time. The time-series data may indicate only changes in the state of one communication device 20, or an overall change of a plurality of communication devices 20.

For example, the time-series data associates each of a plurality of times (dates and times) with the state of the communication device 20 at the time. In this embodiment, a case in which the state of the communication device 20 is expressed by a numerical value is taken as an example, but the state of the communication device 20 may be expressed by a character or a sign. Although the time-series data in a graph format is shown in the example of FIG. 3, the time-series data may have any data format. For example, the time-series data may be in a CSV format, a TSV format, a data format of spreadsheet software, a text format, a document format, or other data formats.

In this embodiment, a case in which the time-series data acquisition module 102 acquires time-series data by generating the time-series data based on the text acquired by the text acquisition module 101 is taken as an example. That is, instead of acquiring time-series data stored in advance in the data storage unit 100, the time-series data acquisition module 102 newly generates time-series data based on the text. The time-series data acquisition module 102 records the generated time-series data in the data storage unit 100. The time-series data acquisition module 102 may update the time-series data by adding the latest time-series change to the time-series data generated in the past.

In this embodiment, a case in which the time-series data acquisition module 102 generates the time-series data by calculating, by aggregation, for each unit time in the time-series data, the number of pieces of text that include content related to anomalies, based on the respective times of the plurality of pieces of text acquired by the text acquisition module 101 is taken as an example. That is, calculation of the number of pieces of text per unit time by aggregation is described as an example of the method of generating the time-series data. Other methods of generating the time-series data are described later in modification examples.

The time of the text is a time of acquisition of a state indicated by the text. That is, the time of the text means a state of what time is indicated by the text as the state of the communication device 20. The time of the text may be expressed as a numerical value included in the text, or as information accompanying the text. In the example of FIG. 2, the alert generation date and time included in the text corresponds to the time of the text. In the case in which the text is an email, a reception date and time of the email may correspond to the time of the text. In the case in which the text is a message in a chat or the like, a date and time of input of the message in a chat or the like may correspond to the time of the text.

For example, out of a plurality of pieces of text in a predetermined period (for example, the immediate last 24 hours), the time-series data acquisition module 102 identifies pieces of text related to the state of the communication device 20 in a unit time that is an aggregation target. The unit time that is an aggregation target is a time for which pieces of text are aggregated. The time-series data acquisition module 102 may calculate, by aggregation, the number of pieces of text per unit time in the predetermined period in chronological order, or may calculate, by aggregation, the number of pieces of text per unit time in the predetermined period in reverse chronological order. The time-series data acquisition module 102 calculates, by aggregation, the number of pieces of text in the unit time that is an aggregation target by counting the total number of pieces of text related to the state of the communication device 20 in the unit time that is an aggregation target.

For example, the time-series data acquisition module 102 calculates, by aggregation, the number of pieces of text in the next unit time that is an aggregation target as well in the same manner, and calculates the number of pieces of text in each unit time by aggregation, one unit time after another. The time-series data acquisition module 102 associates each unit time with a result of calculating the number of pieces of text in the unit time by aggregation, to thereby generate the resultant as the time-series data. When the time-series data is displayed as a visual graph, the time is plotted on the horizontal axis and the number of pieces of text is plotted on the vertical axis as shown in FIG. 3.

In the case in which the text is in a format other than an email as well, the time-series data acquisition module 102 may generate the time-series data in the same way by calculating the number of pieces of text in another format for each unit time by aggregation. For example, in a case in which the text is a message in a chat between administrators, there is a possibility that text having content unrelated to anomalies is transmitted. The time-series data acquisition module 102 may accordingly generate the time-series data by identifying pieces of text that include content related to anomalies, and calculating the number of the identified pieces of text by aggregation. In the case in which the text is an email as well, the time-series data acquisition module 102 may identify pieces of text that include content related to anomalies and calculate the number of the identified pieces of text by aggregation.

For example, the data storage unit 100 may store dictionary data in which words related to anomalies are defined. In this case, the time-series data acquisition module 102 determines whether words related to anomalies are included in the text based on the dictionary data. When a piece of text includes no words related to anomalies, the time-series data acquisition module 102 excludes the piece of text from targets of aggregation. When a piece of text includes a word related to anomalies, the time-series data acquisition module 102 sets the piece of text as a target of aggregation. In the case in which the text is a message other than the message in a chat as well, text unrelated to anomalies may be excluded from targets of aggregation in the same manner.

The method of excluding text unrelated to anomalies from targets of aggregation is not limited to the method that uses the dictionary data. For example, the time-series data acquisition module 102 may exclude text unrelated to anomalies from targets of aggregation based on a machine learning model that has been trained with training text related to anomalies. In this case, the machine learning model calculates, when the text is input, a feature amount (an embedded representation) of the text based on a parameter that has been adjusted by the training, and outputs a classification result (label) corresponding to the feature amount. The classification result indicates whether the text is related to anomalies. The time-series data acquisition module 102 excludes, from targets of aggregation, a piece of text the classification result of which indicates unrelatedness to anomalies. The time-series data acquisition module 102 aggregates pieces of text the classification results of which indicate relatedness to anomalies.

### [Processing Execution Module]

The processing execution module 103 executes processing relating to anomalies in the service, based on the time-series data. It is sufficient for the processing relating to anomalies to be processing that relates to anomalies in some way. For example, the processing execution module 103 may execute the processing relating to anomalies by recording the time-series data acquired by the time-series data acquisition module 102 in the data storage unit 100. The time-series data stored in the data storage unit 100 is referred to by the administrator in order to detect, recover from, or analyze an anomaly in the communication service, and the processing of recording such time-series data is accordingly an example of the processing relating to anomalies.

For example, the processing execution module 103 may execute the processing relating to anomalies by transmitting the time-series data to the administrator terminal 40. The administrator executes detection of, recovery from, or analysis of an anomaly in the communication service by displaying content of the time-series data on the administrator terminal 40, and the processing of transmitting such time-series data is accordingly an example of the processing relating to anomalies. The processing execution module 103 may execute the processing relating to anomalies by analyzing the time-series data with an analysis tool for analyzing anomalies in the communication service. The analysis tool may be a program that automatically determines whether there is an anomaly based on a feature indicated by the time-series data.

For example, the processing execution module 103 may execute the processing relating to anomalies by transmitting predetermined alert to the administrator terminal 40 when the time-series data satisfies a predetermined condition. The predetermined condition is a condition that serves as a criterion for determining whether the processing execution module 103 is to transmit alert. For example, the predetermined condition may be lasting of a state in which a numerical value (in this embodiment, the number of pieces of text) indicated by the time-series data is equal to or more than a threshold value for a predetermined length of time or longer. The processing execution module 103 determines whether the state in which the numerical value indicated by the time-series data is equal to or more than the threshold value has lasted for the predetermined length of time or longer, and, when determining that the state has lasted for the predetermined length of time or longer, transmits the predetermined alert to the administrator terminal 40.

### [4. Processing Executed in Monitoring System]

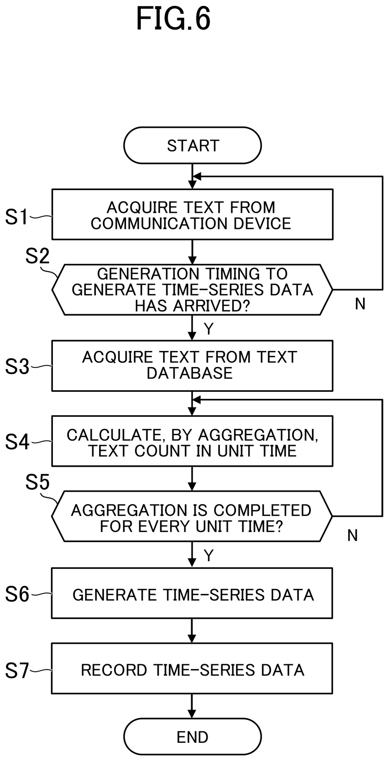

FIG. 6 is a flowchart for illustrating an example of processing executed in the monitoring system 1. In FIG. 6, out of processing executed in the monitoring system 1, processing executed on the server 10 is illustrated. The processing of FIG. 6 is executed by the control unit 11 by executing the program stored in the storage unit 12.

As illustrated in FIG. 6, each time alert is generated in one of the plurality of communication devices 20, the server 10 acquires the text that is transmitted from this communication device 20 to the email address for administration and that indicates generation of the alert (Step S1). In Step S1, the server 10 stores the text in the text database DB1. The server 10 determines whether generation timing to generate the time-series data has arrived (Step S2). In this embodiment, it is assumed that the generation timing arrives periodically (for example, once a day). When it is determined in Step S2 that the generation timing has not arrived (Step S2: N), the process returns to Step S1. The processing step of Step S1 is repeatedly executed until a positive answer is obtained in the determination of Step S2, and acquisition of the text is repeated.

When it is determined in Step S2 that the generation timing has arrived (Step S2: Y), the server 10 acquires, from the text database DB1, pieces of text in a predetermined period (for example, a period from the last time the time-series data is generated to the current time) for which the time-series data is generated (Step S3). The server 10 calculates, by aggregation, the number of pieces of text in a unit time that is an aggregation target (Step S4). The server 10 determines whether the aggregation has been completed for every unit time (Step S5). When it is not determined in Step S5 that there is a unit time for which the aggregation has not been completed (Step S5: N), the process returns to Step S4 and the number of pieces of text in the next unit time is calculated by aggregation. The processing step of Step S4 is repeatedly executed until a positive answer is obtained in the determination of Step S5, and the aggregation is repeated for one unit time after another.

When it is determined in Step S5 that the aggregation has been completed for every unit time (Step S5: Y), the server 10 generates the time-series data which associates each unit time that is an aggregation target with an aggregation result in Step S4 (Step S6). The server 10 executes the processing relating to anomalies by recording the time-series data in the storage unit 12 (Step S7), and this processing is then ended. In Step S7, the server 10 may execute the processing relating to anomalies by transmitting the time-series data to the administrator terminal 40.

### [5. Summary of Embodiment]

The monitoring system 1 of this embodiment acquires text related to the state of the communication device 20. The monitoring system 1 acquires time-series data based on the text. The monitoring system 1 executes processing relating to anomalies in the service based on the time-series data. This enables the monitoring system 1 to acquire time-series data from text. For example, the monitoring system 1 can effectively provide support for the administrator in performing maintenance work by enabling the administrator to execute detection of, recovery from, or analysis of an anomaly that cannot be figured out from just the result of measuring the state of the communication device 20. The monitoring system 1 is also capable of detecting an anomaly quickly, shortening the time required for recovery, and raising precision of analysis by making use of the time-series data acquired from the text.

In addition, the monitoring system 1 acquires the time-series data by generating the time-series data based on the text. The monitoring system 1 can thus newly generate the time-series data from the text instead of preparing the time-series data in advance. Being capable of generating time-series data effective for detection of, recovery from, or analysis of an anomaly from scratch, the monitoring system 1 can effectively provide support for the administrator in performing maintenance work. The monitoring system 1 can achieve quick detection of an anomaly, quick recovery from an anomaly, and improvement in precision of analysis.

The monitoring system 1 also acquires a plurality of pieces of text related to states at times different from one another. The monitoring system 1 generates the time-series data by calculating, by aggregation, for each unit time in the time-series data, the number of pieces of text that include content related to anomalies, based on the respective times of the plurality of pieces of text. The monitoring system 1 can thus generate the time-series data by calculating, by aggregation, the number of pieces of text for each unit time. For example, although information effective for detection of, recovery from, or analysis of an anomaly cannot be obtained from just individual pieces of text, the monitoring system 1 is capable of effectively providing support for the administrator in performing maintenance work by making use of the results of aggregating a plurality of pieces of text as time-series information. The monitoring system 1 can achieve quick detection of an anomaly, quick recovery from an anomaly, and improvement in precision of analysis.

### [6. Modification Examples]

The present disclosure is not limited to the embodiment described above. The present disclosure may be appropriately modified without departing from the purport of the present disclosure.

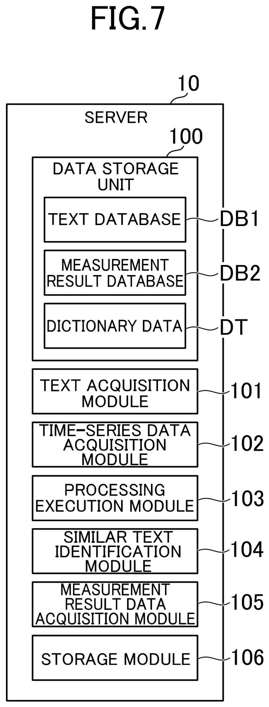

FIG. 7 is a diagram for illustrating an example of functions implemented in the monitoring system 1 of the modification examples. As illustrated in FIG. 7, in the modification examples described below, a similar text identification module 104, a measurement result data acquisition module 105, and a storage module 106 are implemented. The similar text identification module 104, the measurement result data acquisition module 105, and the storage module 106 are each implemented by the control unit 11.

### [6-1. Modification Example 1]

For example, when the server 10 acquires a plurality of pieces of text, pieces of content of the plurality of pieces of text are sometimes similar to one another. In this case, when the server 10 is to calculate, by aggregation, the number of pieces of text per unit time as in the embodiment, there may be too many pieces of text to be aggregated considering the fact that the pieces of content of the pieces of text resemble one another. Accordingly, in Modification Example 1, a case in which the server 10 executes aggregation that varies depending on whether respective pieces of content of the plurality of pieces of text are similar to one another is taken as an example.

The monitoring system 1 of Modification Example 1 includes the similar text identification module 104. The similar text identification module 104 identifies a plurality of pieces of text similar to one another based on respective pieces of content of the plurality of pieces of text. The similar text identification module 104 may determine whether a plurality of pieces of text are similar to one another based on a publicly-known similarity determination algorithm. For example, the similar text identification module 104 may execute morphological analysis for each of a plurality of pieces of text to determine that the plurality of pieces of text are similar to one another when the number of nouns common to one another is equal to or more than a threshold value, or when the proportion of nouns common to one another is equal to or more than a threshold value. For example, the similar text identification module 104 may use cosine similarity based on distributed representation of words to identify pieces of text similar to one another.

For example, the similar text identification module 104 may determine whether a plurality of pieces of text are similar to one another based on a machine learning model trained with pieces of text similar to one another as training data. The similar text identification module 104 inputs two pieces of text that are targets of similarity determination to the machine learning model. The machine learning model calculates a feature amount (an embedded representation) of each of the two pieces of text based on a parameter obtained after training, determines whether the two pieces of text are similar to each other based on their respective feature amounts, and outputs a determination result (label). The similar text identification module 104 refers to the determination result output from the machine learning model, to thereby determine whether the two pieces of text are similar to each other. To give another example, the similar text identification module 104 may identify a plurality of pieces of text similar to one another by converting meanings of text into vectors and executing clustering.

The time-series data acquisition module 102 in Modification Example 1 generates the time-series data by calculating, by aggregation, for each unit time, the number of pieces of text that include content related to anomalies, based further on the result of identifying a plurality of pieces of text similar to one another. For example, when a plurality of pieces of text are identified to be similar to one another, the time-series data acquisition module 102 counts the plurality of pieces of text as 1. When the number of pieces of text similar to one another is given as "n" ("n" is an integer equal to or larger than 2), it is sufficient for the time-series data acquisition module 102 to count the number of the plurality of pieces of text as a number smaller than "n", and it is not required to count the number as 1. For example, when there are five pieces of text similar to one another, the time-series data acquisition module 102 may count the number of the pieces of text similar to one another as one of 1 to 4, instead of 5, and may count the number of the pieces of text similar to one another as a number that includes a decimal point.

The monitoring system 1 of Modification Example 1 identifies pieces of text similar to one another based on respective pieces of content of a plurality of pieces of text. The monitoring system 1 generates the time-series data by calculating, by aggregation, for each unit time, the number of pieces of text that include content related to anomalies, based further on the result of identifying pieces of text similar to one another. The monitoring system 1 can thus avoid counting too many pieces of text when there are a plurality of pieces of text similar to one another, and precision of aggregation of the time-series data can accordingly be raised.

### [6-2. Modification Example 2]

For example, the method by which the time-series data acquisition module 102 generates time-series data from text is not limited to the example of the embodiment. The time-series data acquisition module 102 may extract important information which is important in estimation of an anomaly from text to generate time-series data from the important information. The important information is information related to anomalies. For example, the important information may be a word, a phrase including a plurality of words, or a sentence, or some combination of those. The important information may include a word indicating that a specific phenomenon has occurred in the communication device 20, a date and time of occurrence of the phenomenon, specific content of the phenomenon, a word indicating what change is caused by the phenomenon to an index such as the communication amount, or other words.

In Modification Example 2, a case in which the important information is vector information related to a meaning of text is taken as an example. For example, the data storage unit 100 stores dictionary data DT in which words important to estimation of an anomaly are defined. The dictionary data DT stores vector information for enabling computers to recognize a meaning of a word. The time-series data acquisition module 102 executes morphological analysis on a piece of text that is an aggregation target, executes matching between a morpheme acquired from the piece of text and the dictionary data DT to extract a word important to estimation of an anomaly from the piece of text, and acquires a piece of vector information that indicates the meaning of the word. A publicly-known method is usable as a method of converting a word into a vector. For example, the time-series data acquisition module 102 may acquire vector information of a word extracted from text based on a method called Word2Vec or a method called FastText.

For example, the time-series data acquisition module 102 generates time-series data based on the vector information of words acquired as the important information. In a case in which text indicating the state of one communication device 20 is periodically acquired, the time-series data acquisition module 102 may generate time-series data that associates an acquisition date and time of a piece of text with a piece of vector information acquired from the piece of text. In this case, pieces of vector information acquired from pieces of text may be arranged in time series in the time-series data. The time-series data acquisition module 102 may acquire the vector information based on the important information acquired from text that is alert described in the embodiment, and generate time-series data based on the vector information.

For example, the time-series data acquisition module 102 may acquire the vector information based on the important information acquired from a report of a phenomenon that has occurred in the communication service, or from a message in a chat or the like, and generate time-series data based on the vector information. The method by which the time-series data acquisition module 102 generates time-series data from the important information is not limited to the example of Modification Example 2. The time-series data acquisition module 102 may generate time-series data based on the important information in manners of Modification Examples 3 to 7 described later.

The monitoring system 1 of Modification Example 2 extracts the important information important to estimation of an anomaly from the text, and generates time-series data based on the important information. This enables the monitoring system 1 to make the important information important to estimation of an anomaly reflected in the time-series data, and time-series data effective for estimation of an anomaly can thus be acquired.

### [6-3. Modification Example 3]

For example, in Modification Example 2, text sometimes includes a time related to the state of the communication device 20 (information indicating a state of what time has been acquired) and an index (information plotted on an axis that is not the time axis) included in time-series data, or information from which an index can be estimated. Accordingly, the time-series data acquisition module 102 in Modification Example 3 extracts, from text, the time related to the state of the communication device 20 and the index as the important information, and acquires time-series data based on the time and the index that are indicated by the important information.

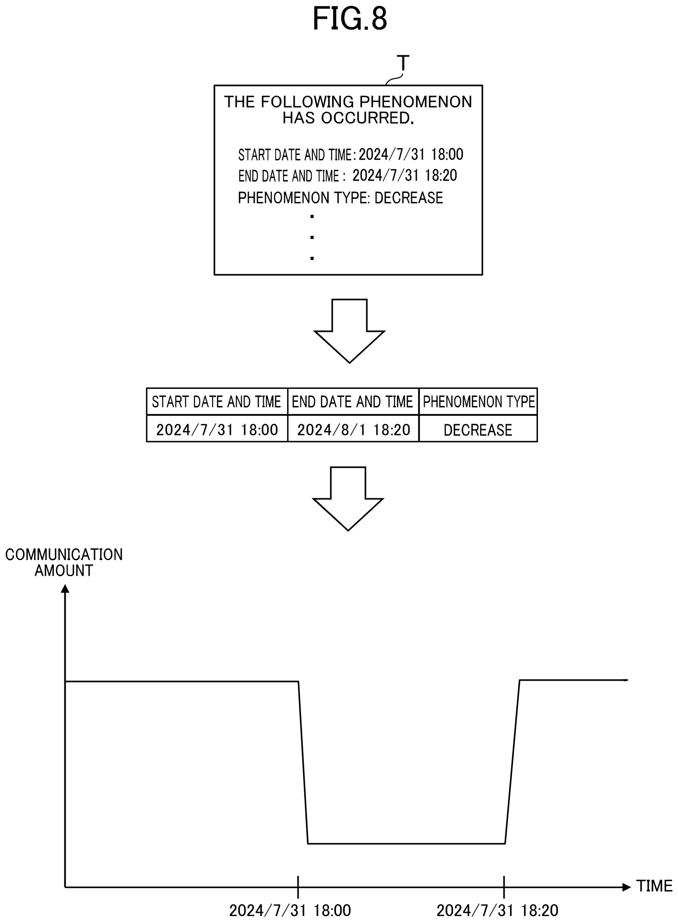

FIG. 8 is a set of diagrams for illustrating an example of a method of generating time-series data in Modification Example 3. As illustrated in FIG. 8, the time-series data acquisition module 102 acquires the time related to the state of the communication device 20 from text. The method of acquiring the time may be the same as in the embodiment. In the example of FIG. 8, text includes information on a date and time and a period of acquisition of a state indicated by the text, and the time-series data acquisition module 102 accordingly acquires the information from the text. For example, in a case in which text includes a start date and time of a phenomenon and an end date and time of the phenomenon, the time-series data acquisition module 102 acquires the start date and time and the end date and time. It is assumed that which part of text includes a date and time is determined in advance. The time-series data acquisition module 102 acquires a date and time indicated in a predetermined part of the text. The time-series data acquisition module 102 may acquire, as a date and time, numerical values placed before or after a specific word such as "date" in text.

For example, in a case in which text includes information indicating a change in an index included in time-series data, the time-series data acquisition module 102 acquires the information from the text. The information may be a word indicating a change of a numerical value such as "rise," "increase," "fall," or "drop." Those words may be defined in the dictionary data DT. When text includes those types of information, the time-series data acquisition module 102 estimates that there has been some change in some index in a specific period, and generates time-series data.

In the case of the example of FIG. 8, the text indicates that the communication amount has dropped for 20 minutes from 18:00 on July 31, 2024, and the time-series data acquisition module 102 accordingly acquires those pieces of information as the important information, and generates time-series data so that the change indicated by the important information is reflected. For example, the time-series data acquisition module 102 deems that the communication amount prior to 18:00 shifts around a numerical value determined in advance. The time-series data acquisition module 102 estimates that, at 18:00, the communication amount has decreased by an amount determined in advance, and deems that the communication amount shifts around a value that is the decreased communication amount until 18:20, which is the end date and time. The time-series data acquisition module 102 estimates that the communication amount has returned to the original value with the arrival of the end date and time, and generates time-series data.

In a case in which text includes a word indicating an increase in communication amount as well, the time-series data acquisition module 102 may generate time-series data in the same manner: the time-series data acquisition module 102 estimates that, at the start date and time, the communication amount has increased by an amount determined in advance, deems that the communication amount shifts around a value that is the increased communication amount until the end date and time, and estimates that the communication amount has returned to the original value with the arrival of the end date and time. In a case of generating time-series data that indicates an index other than the communication amount based on text that indicates the another index as well, the time-series data acquisition module 102 may generate the time-series data in the same manner.

The monitoring system 1 of Modification Example 3 extracts, from text, the time related to the state of the communication device 20 and the index as the important information, and acquires time-series data based on the time and the index that are indicated by the important information. This enables the monitoring system 1 to generate, when text includes information from which time-series data can be generated directly, such as a time and an index, time-series data by estimating a change in time-series of the index from the text.

### [6-4. Modification Example 4]

For example, in Modification Example 3, a word included in text may be a word that indicates a large change in index or a word that indicates a small change in index. Accordingly, the amount of a time-series change indicated by time-series data may be varied depending on what word is included in text. The time-series data acquisition module 102 in Modification Example 4 may extract an index from text based on the dictionary data DT that defines a relationship between a word related to the state of the communication device 20 and a change in index.

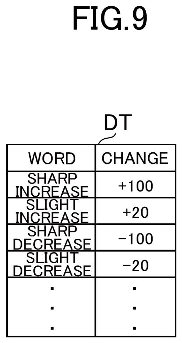

FIG. 9 is a table for showing an example of the dictionary data DT. It is assumed that the dictionary data DT of FIG. 9 is stored in the data storage unit 100. For example, the dictionary data DT associates each of a plurality of words indicating changes in indices with a change in index. The change in index is an increase in index, a decrease in index, or an amount of change in index, or some combination of those. In the example of FIG. 9, a phrase "sharp increase" is associated with an increase in communication amount by a first amount. A phrase "slight increase" is associated with an increase in communication amount by a second amount, which is smaller than the first amount. A phrase "sharp decrease" is associated with a decrease in communication amount by a third amount. A phrase "slight decrease" is associated with a decrease in communication amount by a fourth amount, which is smaller than the third amount.

For example, the time-series data acquisition module 102 executes morphological analysis on text, and matches a morpheme with a word in the dictionary data DT. Execution of morphological analysis may be omitted in a case in which a word placed in a predetermined place in text is a processing target. When the text includes a word that matches with a word in the dictionary data DT, the time-series data acquisition module 102 generates time-series data so that the time-series data indicates a change associated in the dictionary data DT with the included word. The time-series data acquisition module 102 may estimate that the index has changed at a time included in the text. That is, the time-series data acquisition module 102 may estimate a time included in the text as timing at which the index changes.

In the case of the example of FIG. 9, when text includes the phrase "sharp increase," the time-series data acquisition module 102 generates time-series data so that the communication amount increases by the first amount. When text includes the phrase "slight increase," the time-series data acquisition module 102 generates time-series data so that the communication amount increases by the second amount. When text includes the phrase "sharp decrease," the time-series data acquisition module 102 generates time-series data so that the communication amount decreases by the third amount. When text includes the phrase "slight decrease," the time-series data acquisition module 102 generates time-series data so that the communication amount increases by the fourth amount. In this manner, the time-series data acquisition module 102 may generate time-series data so that the time-series data indicates that an index has changed by a change amount that is associated in the dictionary data DT with a word included in the text.

The monitoring system 1 of Modification Example 4 extracts an index from text based on the dictionary data DT that defines a relationship between a word related to the state of the communication device 20 and a change in index. This enables the monitoring system 1 to generate time-series data in which a more specific change in index is reflected, and the precision of the time-series data can accordingly be raised.

### [6-5. Modification Example 5]

For example, in Modification Examples 3 and 4, text sometimes includes information effective for prediction of the state of the communication device 20. In the case in which the communication amount of the communication device 20 has been measured, when text includes such a phrase as "slight increase," there is a possibility that a trend of slight increase continues into the future. In this case, time-series data predicting a future trend of slight increase for a result of measuring the current communication amount may be generated. In Modification Example 5, a case of predicting a future trend based on the important information is taken as an example.

The monitoring system 1 of Modification Example 5 includes the measurement result data acquisition module 105. The measurement result data acquisition module 105 acquires measurement result data related to a measurement result of the state measured in the past. The measurement result data acquisition module 105 acquires the measurement result data related to the state of each of the plurality of communication devices 20 that is a monitoring target in the communication service. For example, the measurement result data acquisition module 105 requests each of the plurality of communication devices 20 to transmit the state of the communication device 20, periodically (for example, every approximately one to thirty seconds or approximately one to five minutes).

For example, when the communication device 20 receives the request made by the measurement result data acquisition module 105 from the server 10, the communication device 20 transmits its own device ID and information indicating its own state (measurement result of its own state) to the server 10. The measurement result data acquisition module 105 adds a current date and time and the information received from the communication device 20 to the measurement result data associated with the device identification information of the communication device 20. A publicly-known measurement method may be used as the method of measuring the state of the communication device 20. The communication device 20 may generate the information indicating its own state based on a publicly-known method of measuring the communication amount, a CPU load factor, a memory usage rate, or other indices.

The communication device 20 may accumulate the measurement result data for a period of some length to transmit the measurement result data at once to the server 10. The data storage unit 100 stores a measurement result database DB2 in which the measurement result data is stored. The measurement result data acquisition module 105 acquires the measurement result data from the communication device 20 at once, and stores the measurement result data in the measurement result database DB2. As another example, the measurement result data acquisition module 105 may irregularly acquire the measurement result data from the communication device 20, instead of periodically. The measurement result data acquisition module 105 may acquire the measurement result data from the communication device 20 at a timing specified by the administrator.

For example, the state at a certain pinpoint timing is not indicated in the measurement result data. The state in a period having a certain length is indicated in the measurement result data. The measurement result data acquisition module 105 may acquire the measurement result data indicating the state in the whole period in the past, but in this embodiment, it is assumed that the measurement result data acquisition module 105 acquires the measurement result data indicating the state in a partial period in the past. For example, the measurement result data acquisition module 105 may acquire the measurement result data related to the time-series change in the state of the communication device 20 in a period including a time point at which the anomaly has been detected.

The time-series data acquisition module 102 in Modification Example 5 generates time-series data by predicting a state in the future based on the important information and on the measurement result data. For example, the time-series data acquisition module 102 generates time-series data by predicting a future trend so that a change in index indicated by the important information is indicated, and adding the result of predicting the future trend to a measurement result indicated by the measurement result data. The measurement result data indicates a measurement result in the past, and the time-series data acquisition module 102 accordingly adds a prediction for a future measurement result by adding a change indicated by the important information as an index in a future time.

For example, when the important information indicates an "increase," the time-series data acquisition module 102 predicts a future trend so that the index increases in the future, and adds the result of the prediction to a measurement result indicated by the measurement result data, to thereby generate time-series data. When the important information indicates a "decrease," the time-series data acquisition module 102 predicts a future trend so that the index decreases in the future, and adds the result of the prediction to a measurement result indicated by the measurement result data, to thereby generate time-series data.

The monitoring system 1 of Modification Example 5 acquires the measurement result data related to a measurement result of a state measured in the past. The monitoring system 1 generates time-series data by predicting a state in the future based on the important information and on the measurement result data. The monitoring system 1 can thus predict a future trend and include information of the future in the time-series data. As a result, the administrator can find out the result of the future prediction, and the monitoring system 1 can thus achieve effective provision of support for the administrator in performing maintenance work.

### [6-6. Modification Example 6]

For example, the time-series data acquisition module 102 may generate time-series data by inputting the important information and a default prompt indicating that time-series data is to be generated based on the important information to a large language model. The large language model is a model capable of natural language processing. The large language model may be a publicly-known model. For example, the large language model may be a transformer-based model an example of which is Generative Pre-trained Transformer (GPT) or Bidirectional Encoder Representations from Transformers (BERT), or may be other models such as a neural network.

In Modification Example 6, the important information is one of prompts input to the large language model. The default prompt is a prompt prepared in advance. The data storage unit 100 stores the default prompt. For example, the default prompt includes a string of characters indicating that time-series data of the state of the communication device 20 is to be generated based on the important information (for example, a string of characters such as "You are an AI that generates time-series data indicating the state of the communication device 20. Generate the time-series data based on important information input to you."). The default prompt indicates a task to be executed by the large language model. The large language model recognizes a task to be executed by itself by the default prompt. The important information may be embedded in the default prompt.

For example, in a case in which the large language model is managed by an external system, the time-series data acquisition module 102 transmits the important information and the default prompt to the external system, to thereby input the important information and the default prompt to the large language model. In a case in which the large language model is stored in the data storage unit 100, the time-series data acquisition module 102 inputs the important information and the default prompt directly to the large language model stored in the data storage unit 100.

For example, the large language model divides the important information and the default prompt into tokens as required, and calculates a feature amount (an embedded representation) based on a parameter obtained after training. The large language model predicts, as required, a sentence that follows, and then outputs time-series data based on the feature amount. The time-series data acquisition module 102 acquires the time-series data output from the large language model. The default prompt may specify the data format of the time-series data.

The monitoring system 1 of Modification Example 6 inputs the important information and the default prompt indicating that time-series data is to be generated based on the important information to the large language model, to thereby generate time-series data. This enables the monitoring system 1 to cause the large language model to generate time-series data, and acquisition of time-series data from text is thus facilitated.

### [6-7. Modification Example 7]

For example, in Modification Examples 2 to 6, when a plurality of pieces of text are acquired by the text acquisition module 101, the plurality of pieces of text sometimes have pieces of content similar to one another. In this case, a single piece of time-series data may be generated based on the important information acquired from each of the plurality of pieces of text similar to one another. The monitoring system 1 of Modification Example 7 includes the similar text identification module 104. The similar text identification module 104 may be the same as in Modification Example 1.

The time-series data acquisition module 102 in Modification Example 7 extracts the important information from each of a plurality of pieces of text similar to one another, and generates time-series data based on the extracted important information. For example, a case in which each of a plurality of pieces of text similar to one another indicates a specific state of a specific communication device 20 is discussed. In this case, the time-series data acquisition module 102 may acquire information on a time and an index from each of the plurality of pieces of text similar to one another, and generate time-series data in which values of the index are arranged in time series based on the time. The method of acquiring the time and the index may be the same as in Modification Example 3.

The monitoring system 1 of Modification Example 7 acquires a plurality of pieces of text and, based on respective pieces of content of the plurality of pieces of text, identifies a plurality of pieces of text that are similar to one another. The monitoring system 1 extracts the important information from each of the plurality of pieces of text similar to one another, and generates time-series data based on the extracted important information. In this manner, the monitoring system 1 can generate time-series data from a plurality of pieces of text similar to one another. For example, a plurality of pieces of text similar to one another indicate a specific state of the same communication device 20 in some cases, and the monitoring system 1 can accordingly generate time-series data by acquiring time-series information from the plurality of pieces of text.

### [6-8. Modification Example 8]

For example, in Modification Examples 4 to 7, the text acquisition module 101 may acquire a plurality of pieces of text including measurement results of a state at times different from one another. In Modification Example 8, it is assumed that the text indicates a CPU usage rate at a certain time. For example, the communication device 20 periodically measures its own CPU usage rate. The communication device 20 generates text including the current date and time at which the CPU usage rate is measured, and the CPU usage rate. The communication device 20 transmits the generated text to the email address for administration.

The text may indicate a measurement result other than the CPU usage rate. Examples of another measurement result are as described in the embodiment. The communication device 20 may generate text including another measurement result and a date and time of acquisition of the measurement result, and transmit the text to the email address for administration. In Modification Example 8 as well, the communication device 20 may generate and transmit text in a format other than the email format (for example, a message in a chat).

The time-series data acquisition module 102 in Modification Example 8 generates time-series data based on a time of each of a plurality of pieces of text and a measurement result included in each of the plurality of pieces of text. For example, the time-series data acquisition module 102 generates time-series data by arranging, in time-series order of respective times of a plurality of pieces of text, measurement results respectively included in the plurality of pieces of text. In Modification Example 8, text includes the current date and time at which the CPU usage rate is measured and the CPU usage rate, and the time-series data acquisition module 102 accordingly generates time-series data by arranging measured rates of the CPU usage rate in time-series order of dates and times of measurement of the CPU usage rate. The time-series data acquisition module 102 may generate time-series data of measurement results other than the CPU usage rate in the same manner, by arranging measurement results in time-series order.

The monitoring system 1 of Modification Example 8 acquires a plurality of pieces of text including measurement results of a state at times different from one another. The monitoring system 1 generates time-series data based on respective times of the plurality of pieces of text and measurement results respectively included in the plurality of pieces of text. In this manner, the monitoring system 1 can acquire time-series data from a plurality of pieces of text including measurement results of a state at times different from one another.

### [6-9. Modification Example 9]

For example, processing executed by the processing execution module 103 is not limited to the example of the embodiment. In Modification Example 9, a case in which the processing execution module 103 executes processing of identifying relevance between one communication device 20 and another communication device 20 is taken as an example. The relevance between one communication device 20 and another communication device 20 is correlation between one communication device 20 and another communication device 20. For example, when an anomaly occurs in the communication service, a plurality of communication devices 20 that behave in a manner similar to one another are relevant to one another. When a change in measurement result of one communication device 20 is accompanied by a change in measurement result of another communication device 20, those communication devices 20 are relevant to each other.

The monitoring system 1 of Modification Example 9 includes the measurement result data acquisition module 105. The measurement result data acquisition module 105 may be the same as in Modification Example 5. The data storage unit 100 in Modification Example 9 stores the measurement result database DB2 in which measurement result data acquired from each of the plurality of communication devices 20 is stored. The processing execution module 103 in Modification Example 9 executes processing by identifying, out of respective pieces of measurement result data of a plurality of other devices, a piece of measurement result data that is relevant to the time-series data. The processing execution module 103 identifies a piece of measurement result data in the measurement result database DB2 that has a feature resembling the time-series data.

For example, the processing execution module 103 executes clustering of a plurality of pieces of measurement result data stored in the measurement result database DB2 and clustering of the time-series data. The clustering is processing of identifying pieces of state data having features similar to each other. The clustering is sometimes called "grouping." The processing execution module 103 executes the clustering such that pieces of state data having features similar to each other belong to the same cluster. A plurality of pieces of state data belonging to a certain cluster show features similar to each other. The number of clusters may be set in advance, or may be allowed not to be particularly set.

A method itself for the clustering may be a publicly-known method. For example, the processing execution module 103 may execute the clustering based on k-means, hierarchical clustering, density-based clustering, a Gaussian mixture model, or spectral clustering. As another example, the processing execution module 103 may execute the clustering based on a machine learning model created by using a method of machine learning. The machine learning model may also be a model created through a publicly-known method. For example, the processing execution module 103 may execute the clustering by inputting the state data of each of the plurality of communication devices 20 to a model such as a recurrent neural network (RNN), a long short-term memory (LSTM), or a transformer-based model.

For example, the processing execution module 103 identifies, based on results of executing the clustering, measurement result data that belongs to the same cluster as the cluster of the time-series data. The processing execution module 103 records the identified measurement result data in the data storage unit 100 in association with the time-series data. The processing execution module 103 may notify the administrator that the measurement result data and the time-series data have been associated with each other. The processing execution module 103 may record the communication device 20 indicated by a piece of text that corresponds to the time-series data and another communication device 20 which is indicated by the measurement result data in the data storage unit 100 in association with each other. The processing execution module 103 may notify the administrator that those communication devices 20 have been associated with each other.

The monitoring system 1 of Modification Example 9 acquires, with respect to one communication device 20, pieces of measurement result data related to respective measurement results of a plurality of other communication devices 20 in time series. The monitoring system 1 executes processing by identifying, out of the respective pieces of measurement result data of the plurality of other communication devices 20, a piece of measurement result data that has relevance to the time-series data. This enables the monitoring system 1 to identify relevance between the one communication device 20 and another communication device 20. For example, even when the administrator is unaware of relevance between the communication devices 20, the monitoring system 1 can identify the relevance by clustering, and accordingly enables the administrator to quickly start on recovery when an anomaly occurs. The monitoring system 1 can thus effectively provide support for the administrator in performing maintenance work.

### [6-10. Modification Example 10]

For example, the time-series data acquisition module 102 may acquire, instead of generating time-series data from text, time-series data suitable for the text from pieces of time-series data prepared in advance. The monitoring system 1 of Modification Example 10 includes the measurement result data acquisition module 105 and the storage module 106. The measurement result data acquisition module 105 may be the same as in Modification Example 5. Measurement result data in Modification Example 10 is measurement result data related to respective measurement results, in time series, of a plurality of other communication devices 20 other than the communication device 20 that is indicated by text acquired by the text acquisition module 101. That is, the communication device 20 the state of which is indicated by the text differs from the communication devices 20 the states of which are indicated by the measurement result data.

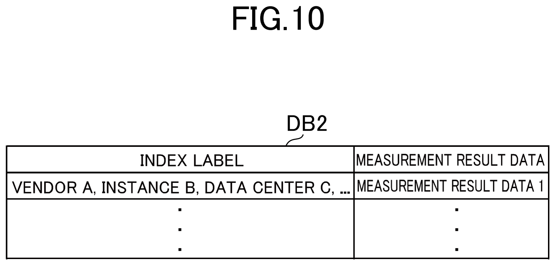

FIG. 10 is a table for showing an example of the measurement result database DB2 in Modification Example 10. In Modification Example 10, the storage module 106 stores respective pieces of measurement result data of the plurality of other communication devices 20 in the measurement result database DB2 in association with index labels of the pieces of measurement result data. The index labels are information referred to in a search of the measurement result data. The index labels each include a string of characters. For example, the index labels may be manufacturers, model numbers, functions, placement locations, or other types of information of the communication devices 20. The index labels may be information created by converting those strings of characters into vectors. For example, when acquiring a piece of measurement result data from one communication device 20, the storage module 106 stores those pieces of information as an index label in the measurement result database DB2 in association with the piece of measurement result data.

The time-series data acquisition module 102 in Modification Example 10 searches the measurement result database DB2 based on the text related to the state of the communication device 20, to thereby acquire the time-series data. In Modification Example 10, the text is used as a query for searching the measurement result database DB2. For example, the text may be a manufacturer, a model number, a function, a placement location, or other types of information of the communication device 20. The time-series data acquisition module 102 searches the measurement result database DB2 with the text as a query. A publicly-known search engine may be used for the search. In the case in which the index labels are vectorized information, the time-series data acquisition module 102 may convert the text into a vector to acquire a piece of measurement result data that is at the shortest distance from the index label.

For example, the time-series data acquisition module 102 acquires, as the time-series data, pieces of measurement result data that are hits in the search. The acquired pieces of measurement result data are data indicating the states of the other communication devices 20 other than the communication device 20 for which the text has been acquired, but have a possibility of being in states similar to the state of the communication device 20 for which the text has been acquired, because the acquired pieces of measurement result data are hits in the search based on the text. Accordingly, the time-series data acquisition module 102 may acquire the pieces of measurement result data as the time-series data of the communication device 20. That is, although the communication devices 20 indicated by the pieces of measurement result data are not the communication device 20 that is indicated by the text used as a query, the time-series data acquisition module 102 acquires, as the time-series data, measurement result data that has an index label similar to the text used as a query.

The monitoring system 1 of Modification Example 10 acquires, with respect to one communication device 20, pieces of measurement result data related to respective measurement results, in time series, of a plurality of other communication devices 20 other than the one communication device 20. The monitoring system 1 stores the respective pieces of measurement result data of the plurality of other communication devices 20 in the measurement result database DB2 in association with the index labels of the pieces of measurement result data. The monitoring system 1 searches the measurement result database DB2 based on the text, to thereby acquire the time-series data. In this manner, the monitoring system 1 can acquire, as the time-series data, measurement result data of another communication device 20 that is similar to the communication device 20 indicated by the text.

### [6-11. Other Modification Examples]

For example, the above-mentioned modification examples may be combined with one another.

For example, the monitoring system 1 can be applied also to another service other than the communication service. For example, the monitoring system 1 may identify the relevant data relevant to the anomaly factor data that is a factor in an anomaly in another service such as an electronic commerce service, a travel reservation service, a financial service, a payment service, an online flea market service, or a video distribution service. A device that is a monitoring target is only required to be a device used in one of those services, and is not limited to the communication device as in the embodiment. For example, the device that is the monitoring target may be a server computer, a personal computer, a tablet computer, a power supply device, a printer, a scanner, or another device.

For example, in the embodiment, the case in which the main processing is executed in the server 10 has been described, but the processing described as the processing executed in the server 10 may be executed in the administrator terminal 40 or another computer, or may be distributed to a plurality of computers.

### [7. Supplementary Notes]

For example, the monitoring system may have the following configurations.
(1) A monitoring system, including:
   a text acquisition module configured to acquire text related to a state of a device that is a monitoring target in a service;
   a time-series data acquisition module configured to acquire, based on the text, time-series data related to the state; and
   a processing execution module configured to execute, based on the time-series data, processing relating to an anomaly in the service.
(2) The monitoring system according to Item (1), wherein the time-series data acquisition module is configured to acquire the time-series data by generating the time-series data based on the text.
(3) The monitoring system according to Item (2),
   wherein the text acquisition module is configured to acquire a plurality of pieces of text related to the state at times different from one another, and
   wherein the time-series data acquisition module is configured to generate the time-series data by calculating, by aggregation, for each unit time in the time-series data, the number of pieces of text that include content related to the anomaly, based on the respective times of the plurality of pieces of text.
(4) The monitoring system according to Item (3), further including a similar text identification module configured to identify, based on content of each of the plurality of pieces of text, a plurality of pieces of text similar to one another,
   wherein the time-series data acquisition module is configured to generate the time-series data by calculating, by aggregation, for each unit time in the time-series data, the number of pieces of text that include content related to the anomaly, based further on a result of identifying the plurality of pieces of text similar to one another.
(5) The monitoring system according to Item (4), wherein the time-series data acquisition module is configured to extract important information important to estimation of the anomaly from the text, and generate the time-series data based on the important information.
(6) The monitoring system according to Item (5), wherein the time-series data acquisition module is configured to extract a time related to the state and an index from the text as the important information, and acquire the time-series data based on the time and the index that are indicated by the important information.
(7) The monitoring system according to Item (6), wherein the time-series data acquisition module is configured to extract the index from the text based on dictionary data in which a relationship between a word related to the state and a change in the index is defined.
(8) The monitoring system according to any one of Items (5) to (7), further including a measurement result data acquisition module configured to acquire measurement result data related to a measurement result of the state measured in a past,
   wherein the time-series data acquisition module is configured to generate the time-series data by predicting the state in a future based on the important information and the measurement result data.
(9) The monitoring system according to any one of Items (5) to (8), wherein the time-series data acquisition module is configured to generate the time-series data by inputting, to a large language model, the important information and a default prompt indicating that the time-series data is to be generated based on the important information.
(10) The monitoring system according to any one of Items (5) to (9),
   wherein the text acquisition module is configured to acquire a plurality of pieces of text, and
   wherein the time-series data acquisition module is configured to extract the important information from each of the plurality of pieces of text similar to one another, and generate the time-series data based on the important information.
(11) The monitoring system according to any one of Items (3) to (10), wherein the time-series data acquisition module is configured to generate the time-series data based on the time of each of the plurality of pieces of text and on the measurement result included in each of the plurality of pieces of text.
(12) The monitoring system according to any one of Items (2) to (11), further including a measurement result data acquisition module configured to acquire pieces of measurement result data related to respective measurement results, in time series, of a plurality of other devices other than the device,
   wherein the processing execution module is configured to execute the processing by identifying, out of the respective pieces of measurement result data of the plurality of other devices, a piece of measurement result data that is relevant to the time-series data.
(13) The monitoring system according to any one of Items (1) to (12), further including:
   a measurement result data acquisition module configured to acquire pieces of measurement result data related to respective measurement results, in time series, of a plurality of other devices other than the device; and
   a storage module configured to store the respective pieces of measurement result data of the plurality of other devices in a measurement result database in association with index labels of the pieces of measurement result data,
   wherein the time-series data acquisition module is configured to acquire the time-series data by searching the measurement result database based on the text.

## Claims

1. A monitoring system, comprising:
a text acquisition module configured to acquire text related to a state of a device that is a monitoring target in a service;
a time-series data acquisition module configured to acquire, based on the text, time-series data related to the state; and
a processing execution module configured to execute, based on the time-series data, processing relating to an anomaly in the service.

2. The monitoring system according to claim 1, wherein the time-series data acquisition module is configured to acquire the time-series data by generating the time-series data based on the text.

3. The monitoring system according to claim 2,
wherein the text acquisition module is configured to acquire a plurality of pieces of text related to the state at times different from one another, and
wherein the time-series data acquisition module is configured to generate the time-series data by calculating, by aggregation, for each unit time in the time-series data, the number of pieces of text that include content related to the anomaly, based on the respective times of the plurality of pieces of text.

4. The monitoring system according to claim 3, further comprising a similar text identification module configured to identify, based on content of each of the plurality of pieces of text, a plurality of pieces of text similar to one another,
wherein the time-series data acquisition module is configured to generate the time-series data by calculating, by aggregation, for each unit time in the time-series data, the number of pieces of text that include content related to the anomaly, based further on a result of identifying the plurality of pieces of text similar to one another.

5. The monitoring system according to claim 4, wherein the time-series data acquisition module is configured to extract important information important to estimation of the anomaly from the text, and generate the time-series data based on the important information.

6. The monitoring system according to claim 5, wherein the time-series data acquisition module is configured to extract a time related to the state and an index from the text as the important information, and acquire the time-series data based on the time and the index that are indicated by the important information.

7. The monitoring system according to claim 6, wherein the time-series data acquisition module is configured to extract the index from the text based on dictionary data in which a relationship between a word related to the state and a change in the index is defined.

8. The monitoring system according to any one of claims 5 to 7, further comprising a measurement result data acquisition module configured to acquire measurement result data related to a measurement result of the state measured in a past,
wherein the time-series data acquisition module is configured to generate the time-series data by predicting the state in a future based on the important information and the measurement result data.

9. The monitoring system according to any one of claims 5 to 7, wherein the time-series data acquisition module is configured to generate the time-series data by inputting, to a large language model, the important information and a default prompt indicating that the time-series data is to be generated based on the important information.

10. The monitoring system according to any one of claims 5 to 7,
wherein the text acquisition module is configured to acquire a plurality of pieces of text, and
wherein the time-series data acquisition module is configured to extract the important information from each of the plurality of pieces of text similar to one another, and generate the time-series data based on the important information.

11. The monitoring system according to any one of claims 3 to 7, wherein the time-series data acquisition module is configured to generate the time-series data based on the time of each of the plurality of pieces of text and on the measurement result included in each of the plurality of pieces of text.

12. The monitoring system according to any one of claims 2 to 7, further comprising a measurement result data acquisition module configured to acquire pieces of measurement result data related to respective measurement results, in time series, of a plurality of other devices other than the device,
wherein the processing execution module is configured to execute the processing by identifying, out of the respective pieces of measurement result data of the plurality of other devices, a piece of measurement result data that is relevant to the time-series data.

13. The monitoring system according to any one of claims 1 to 7, further comprising:
a measurement result data acquisition module configured to acquire pieces of measurement result data related to respective measurement results, in time series, of a plurality of other devices other than the device; and
a storage module configured to store the respective pieces of measurement result data of the plurality of other devices in a measurement result database in association with index labels of the pieces of measurement result data,
wherein the time-series data acquisition module is configured to acquire the time-series data by searching the measurement result database based on the text.

14. A monitoring method, comprising:
a text acquisition step of acquiring text related to a state of a device that is a monitoring target in a service;
a time-series data acquisition step of acquiring, based on the text, time-series data related to the state; and
a processing execution step of executing, based on the time-series data, processing relating to an anomaly in the service.

15. A program for causing a computer to function as:
a text acquisition module configured to acquire text related to a state of a device that is a monitoring target in a service;
a time-series data acquisition module configured to acquire, based on the text, time-series data related to the state; and
a processing execution module configured to execute, based on the time-series data, processing relating to an anomaly in the service.
